# EUROPEAN PATENT SPECIFICATION

(11) **EP 3 929 947 B1**
(45) Date of publication and mention of the grant of the patent: **26.08.2026**
(21) Application number: 20305705.4
(22) Date of filing: 26.06.2020
(51) Int. Cl.: H01C 17/22, H01C 17/28, H01G 4/005, H01G 4/33, H01G 4/38, H01G 4/40, H01G 4/255

(54) **METHOD OF FABRICATING A DEVICE COMPRISING AN ELECTRICAL COMPONENT WITH SUB COMPONENTS CONNECTED USING A PLATE TO CONTROL AN ELECTRICAL PARAMETER**
VERFAHREN ZUR HERSTELLUNG EINER VORRICHTUNG, DIE EIN ELEKTRISCHES BAUELEMENT MIT UNTERKOMPONENTEN ENTHÄLT, DIE UNTER VERWENDUNG EINER PLATTE ZUR STEUERUNG EINES ELEKTRISCHEN PARAMETERS VERBUNDEN SIND
PROCÉDÉ DE FABRICATION D'UN DISPOSITIF COMPRENANT UN COMPOSANT ÉLECTRIQUE COMPORTANT DES COMPOSANTS SECONDAIRES CONNECTÉS À L'AIDE D'UNE PLAQUE POUR COMMANDER UN PARAMÈTRE ÉLECTRIQUE

(43) Date of publication of application: 29.12.2021
(73) Proprietor: Murata Manufacturing Co., Ltd., Nagaokakyo-shi, Kyoto 617-8555 (JP)
(72) Inventor: VAUCLAIR, Sébastien, 14000 Caen (FR); DENIS, David, 14400 Bayeux (FR); LENOIR, Lionel, 14000 Caen (FR)
(74) Representative: Cabinet Beau de Loménie

(56) References cited:
- EP-A1- 2 012 421
- EP-B1- 2 012 421
- JP-A- S59 132 611
- JP-U- S59 180 463
- US-A- 5 910 755
- US-A1- 2015 022 938

## Description

### Field of the Invention

The present invention relates to the field of integration and, more particularly, to electronic products, related semiconductor products, and their methods of manufacture. The present invention in particular relates to manufacturing electrical components having precisely controlled electrical and physical parameters.

### Technical Background

Electrical components such as passive components can now be integrated, for example using silicon manufacturing technologies. Silicon passive integration technologies have shown that it is possible to manufacture three-dimensional (3D) features so as to increase, for example, capacitance values of integrated capacitors.

By way of example, it has been proposed to use trenches, holes, pillars, or even porous structures to form 3D capacitors with increased capacitance values with respect to a planar capacitor occupying the same area.

Also, silicon manufacturing technologies can be used to manufacture resistors and inductors.

However, it has been observed that silicon manufacturing technologies can lead to a spread of plus or minus 10% to 20% around a nominal value for the capacitance or the resistance.

It has been proposed to sort the devices which have been manufactured so as to put aside the devices which present a deviation from the nominal value which is greater than a given threshold. This solution leads to a poor yield.

It has also been proposed to manufacture components by forming a plurality of sub-components electrically connected by wires. Subsequently, selected wires are opened, for example by laser fusing, so that the component only comprises a number of selected sub-components and presents a desired electrical parameter value. This solution therefore requires a specific routing for the interconnections. Also, the heat from the lasers may damage the device. Also, if the component is a capacitor, this solution increases the Equivalent Series Resistance (ESR) of the capacitor because of the resistance introduced by the wires.

Finally, it has been proposed to use active components, for example switches, so as to connect or disconnect sub-components. This solution is not satisfactory as adding active components is costly and increases the ESR.

From the prior art, the following documents are known:
- US 7300807, EP2012421, US2015/022938A1 and US 7566946 propose to use fuses between sub-components; and
- US 20100167427 proposes to trim single components so as to adjust electrical parameters.
- JPS59132611A proposes a capacitor wherein a conductive layer contacts selected sub-components in order to achieve a desired component value.

There is a need for a manufacturing method which leads to precise components with good ESR, and which is simple to implement.

This need is particularly critical in applications where the values of two components should be matched to one another.

The present invention has been made in the light of the above problems.

### Summary of the Invention

The present invention provides a method of fabricating a device comprising at least one electrical component comprising:
- forming, above a substrate, a plurality of sub-components each having a top electrode,
- measuring an actual value of an electrical parameter of at least one sub-component of the plurality of sub-components,
- forming a conductive plate for connecting together the top electrodes of sub-components of a group of selected sub-components belonging to the plurality of sub-components so as to form the electrical component having a value of the electrical parameter which approximates a desired value, by taking into account the actual value of the at least one sub-component.

Thus, the above method proposes to form an entire conductive plate so as to connect together only the sub-components which are to be connected together. A conductive plate which is in direct contact with the top electrodes of the selected sub-components adds negligible resistance to the connection of the top electrodes because it is a plate which covers the entire top electrodes.

It should be noted that the sub-components can be any component which can be manufactured on a substrate (for example equipped with a bottom electrode) and, on top of the component, a top electrode. Preferably, only the top electrode is accessible from the top of the component (i.e. not the bottom electrode if there is one).

Also, the substrate can be a silicon wafer.

The method comprises forming an insulating layer over the top electrodes of the sub-components that do not belong to the group of selected sub-components.

This insulating layer prevents forming an electrical contact between the conductive plate and the top electrodes of the sub-components which are not in a group of selected sub-components. Thus, the conductive plate can overlap the electrodes of these sub-components which are not in a group of selected sub-components.

Also, the conductive plate covers the insulating layer and the top electrodes of the group of selected sub-components.

This is particularly advantageous as the conductive plate can be manufactured without any patterning, which facilitates its manufacturing.

According to a particular embodiment, taking into account the actual value of the at least one sub-component comprises determining a deviation between a nominal value associated with the at least one component and the actual value.

According to a particular embodiment, the method comprises measuring a plurality of actual values of the electrical parameter of sub-components at given positions.

For example, if the sub-components are spread on a silicon wafer, it is possible to use given positions spread on the wafer.

According to a particular embodiment, the method comprises forming a plurality of electrical components by connecting together the top electrodes of a plurality of groups of selected sub-components, and wherein each group of selected sub-components belongs to a region associated with the corresponding electrical component.

For example, each region is a rectangle on a silicon wafer in which all the sub-components that can be used for a component are arranged.

According to a particular embodiment, the given positions are located in at least two distinct regions associated with different electrical components.

Measuring the actual value of the electrical parameter can therefore be performed on sub-components from different regions, for example so as to cover the entire surface of the wafer on which the sub-components are arranged. Typically, measuring the actual value of the electrical parameter can be performed on sub-components which are arranged on a grid with a pitch comprised between one centimeter and ten centimeters.

According to a particular embodiment, the insulating layer is formed using a mask-less process.

A mask-less process does not comprise using a photoresist insulated using a mask including a fixed chrome layer.

For example, document CN 107887324 discloses using mask-less processes.

According to a particular embodiment, the mask-less process comprises an e-beam process or using an LCD mask.

For example, a mask-less process can comprise using an LCD between a luminous source and a layer to be patterned to obtain the insulating layer. Alternatively, a mask-less process can include using an e-beam, for example an e-beam which scans a layer to be patterned to obtain the insulating layer. The invention is however not limited to these two examples and the person skilled in the art will chose the appropriate mask-less method, depending on the requirements of the application.

According to a particular embodiment, the conductive plate completely covers the top face of the at least one electrical component (above and on the top electrodes of the sub-components of the group of selected sub-components, as well as above and on the insulating layer).

According to a particular embodiment, the sub-components are associated with nominal values for the electrical parameters selected according to a given distribution of nominal values.

According to a particular embodiment, the number of sub-components is above 10 or above 100 or above 200.

For example, the number of sub-components of a single region associated with a component can be above, 10, 100, or 200.

According to a particular embodiment, the sub-components are capacitors and the electrical parameter is the capacitance or wherein the sub-components are resistors and the electrical parameter is the resistance.

For example, the capacitors can be 3D capacitors, with electrodes presenting a relief.

The invention also provides a device comprising at least one electrical component comprising:
- a substrate,
- above the substrate, a plurality of sub-components each having a top electrode,
- a conductive plate connecting together the top electrodes of sub-components of a group of selected sub-components belonging to the plurality of sub-components so as to form the electrical component having a value of the electrical parameter which approximates a desired value.
The device comprises an insulating layer (103) over the top electrodes of the sub-components that do not belong to the group of selected sub-components, and in that the conductive plate covers the insulating layer and the top electrodes of the group of selected sub-components

This device can be obtained using any embodiment of the above described method.

According to a particular embodiment, the device comprises an insulating layer over the top electrodes of the sub-components that do not belong to the group of selected sub-components.

According to a particular embodiment, the conductive plate completely covers the top face of the at least one electrical component.

### Brief Description of the Drawings

Further features and advantages of the present invention will become apparent from the following description of certain embodiments thereof, given by way of illustration only, not limitation, with reference to the accompanying drawings in which:
Figure 1A shows a device according to an example and before a conductive plate is formed and figure 1B shows the corresponding circuit,
Figure 2A shows the device of figure 1A after a conductive plate has been formed and figure 1B shows the corresponding circuit,
Figure 3A shows a device according to another example and figure 3B shows the corresponding circuit,
Figure 4A shows the device of figure 3A with a deviation and figure 4B shows the corresponding circuit,
Figure 5A shows the device of figure 3A with another deviation and figure 5B shows the corresponding circuit, and
Figure 6 shows a wafer comprising devices according to another example.

### Detailed Description of Example Embodiments

We will now describe a method of fabricating a device and the corresponding device. This device comprises capacitors having a precisely controlled value, for example with a deviation around a nominal value of less than 1%.

The invention is however not limited to devices equipped with capacitors and concerns devices with other electrical components, for example resistors.

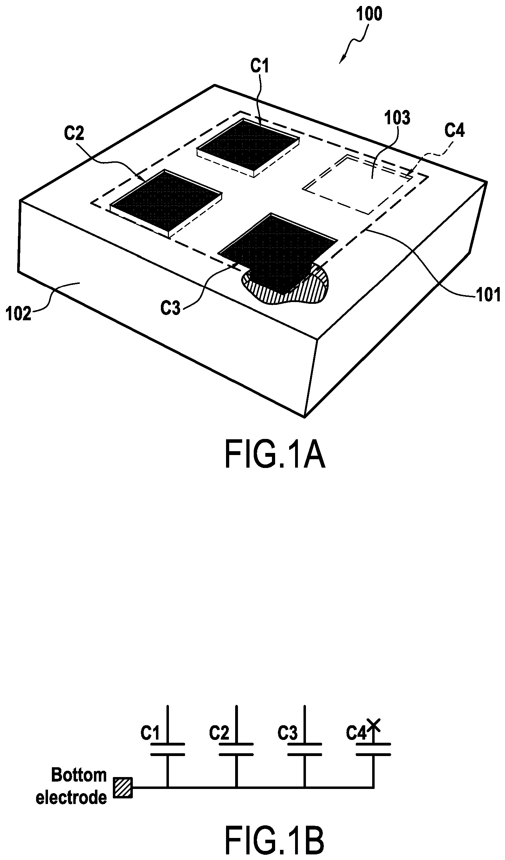

Figure 1A is a perspective view of a device 100 which comprises a capacitor 101 visible in an unfinished state.

The capacitor 101 is formed above a substrate 102, for example a silicon substrate, and it comprises four sub-capacitors C1, C2, C3, and C4.

For example, sub-capacitors C1 to C4 are 3D sub-capacitors as disclosed in documents WO 2007/125510 and WO 2015/063420.

At this stage, the top electrodes of the sub-capacitors are left floating and the corresponding circuit is shown on figure 1B. This allows using any combination of the sub-capacitors C1 to C4 connected together in parallel to form the finished capacitor 101.

To do so, fabricating the device includes a step of measuring an actual value of the capacitance of a sub-capacitor, for example a sub-capacitor from the group of sub-capacitors C1 to C4 (another the capacitance of one or several sub-capacitors present on the substrate 102 can also be measured). This allows determining a deviation between the actual capacitance of the sub-component on which a measurement is carried out and a nominal value associated with this sub-component.

It can be assumed that the deviation also applies to the surrounding sub-capacitors as these were manufactured using silicon processing techniques, which manufacture components in parallel.

Thus, from this deviation, it can be deduced how many sub-capacitors have to be connected together to obtain a desired capacitance value for the capacitor 101.

In the illustrated example, one capacitor can remain disconnected because in view of the measured deviation three capacitors can approximate the desired capacitance value. This is performed by forming an insulating layer 104 above the top electrode of sub-capacitor C4 while the top electrodes of capacitors C1, C2, and C3 remain exposed.

The insulating layer 104 can also cover zones which are placed between capacitor electrodes.

In the present example, the insulating layer is formed using a mask-less process, for example using an e-beam or an LCD.

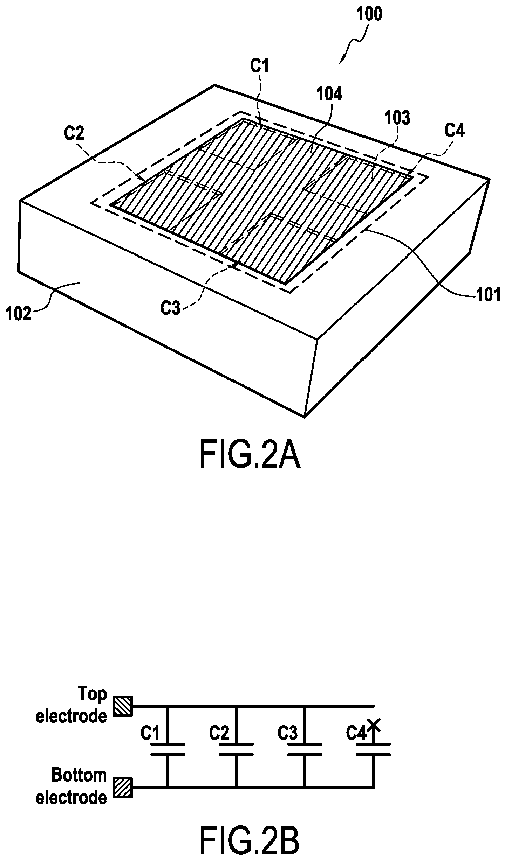

Figure 2A shows the device of figure 1A and 1B avec the formation of a conductive plate 104 which covers completely the top face of the capacitor. The resulting electrical circuit is shown on figure 2B.

As can be seen on the figure, the conductive plate 104 is a rectangular conductive plate formed above the top electrodes of all the sub-capacitors C1 to C4, but which is prevented from forming an electrical contact with the top electrode of sub-capacitor C4.

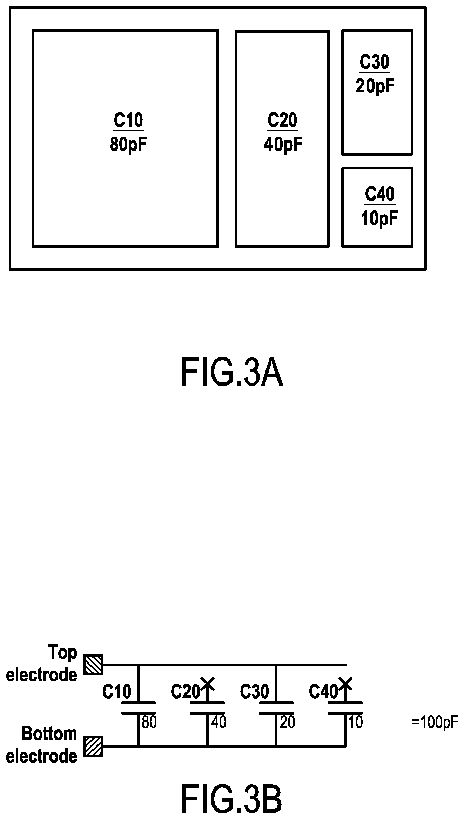

Figure 3A shows an example of device comprising a capacitor including four sub-capacitors:
- Sub-capacitor C10 having a nominal capacitance value of 80pF and an actual value of 80pF,
- Sub-capacitor C20 having a nominal capacitance value of 40pF and an actual value of 40pF,
- Sub-capacitor C30 having a nominal capacitance value of 20pF and an actual value of 20pF, and
- Sub-capacitor C40 having a nominal capacitance value of 10pF and an actual value of 10pF.

The invention is not limited to capacitors including four sub-capacitors, this number of four capacitors having been chosen for the sake of conciseness.

In order to obtain a capacitor having a desired capacitance value of 100pF, capacitors C10 and C30 can be used to obtain the electrical circuit of figure 3B and using the process shown on figures 1A and 2A.

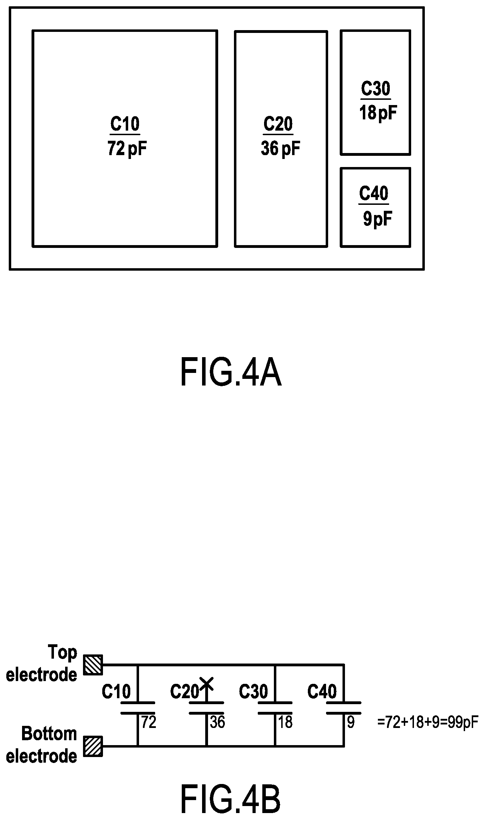

Figure 4A shows an example of device corresponding to the device of figure 3A but wherein a deviation of -10% has impacted the capacitance values during the manufacturing of the sub-capacitors. This deviation can be obtained by performing one or several measurements. The device comprises a capacitor including four sub-capacitors:
- Sub-capacitor C10 having a nominal capacitance value of 80pF and an actual value of 72pF,
- Sub-capacitor C20 having a nominal capacitance value of 40pF and an actual value of 36pF,
- Sub-capacitor C30 having a nominal capacitance value of 20pF and an actual value of 18pF, and
- Sub-capacitor C40 having a nominal capacitance value of 10pF and an actual value of 9pF.

In order to obtain a capacitor having a desired capacitance value close to 100pF, capacitors C10, C30 and C40 can be used to obtain the electrical circuit of figure 4B and using the process shown on figures 1A and 2A. The capacitor will have a capacitance value of 99pF (a 1% deviation).

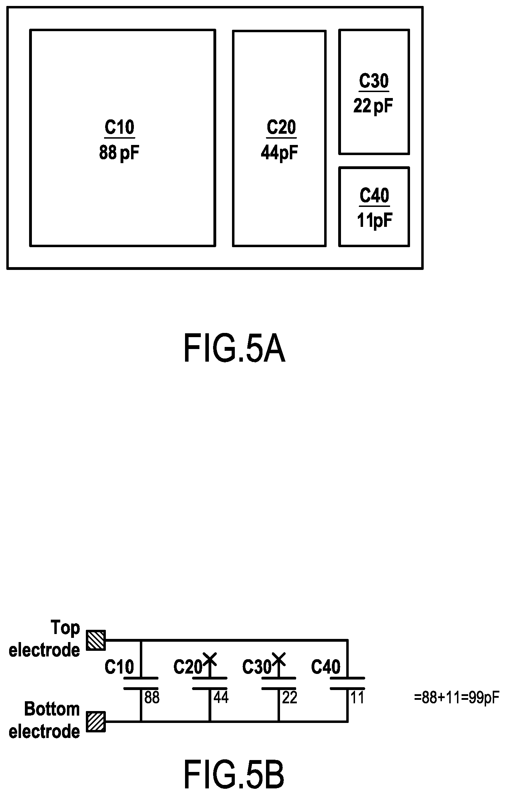

Figure 5A shows an example of device corresponding to the device of figure 3A but wherein a deviation of +10% has impacted the capacitance values during the manufacturing of the sub-capacitors. This deviation can be obtained by performing one or several measurements. The device comprises a capacitor including four sub-capacitors:
- Sub-capacitor C10 having a nominal capacitance value of 80pF and an actual value of 88pF,
- Sub-capacitor C20 having a nominal capacitance value of 40pF and an actual value of 44pF,
- Sub-capacitor C30 having a nominal capacitance value of 20pF and an actual value of 22pF, and
- Sub-capacitor C40 having a nominal capacitance value of 10pF and an actual value of 11pF.

In order to obtain a capacitor having a desired capacitance value close to 100pF, capacitors C10 and C40 can be used to obtain the electrical circuit of figure 5B and using the process shown on figures 1A and 2A. The capacitor will have a capacitance value of 99pF (a 1% deviation).

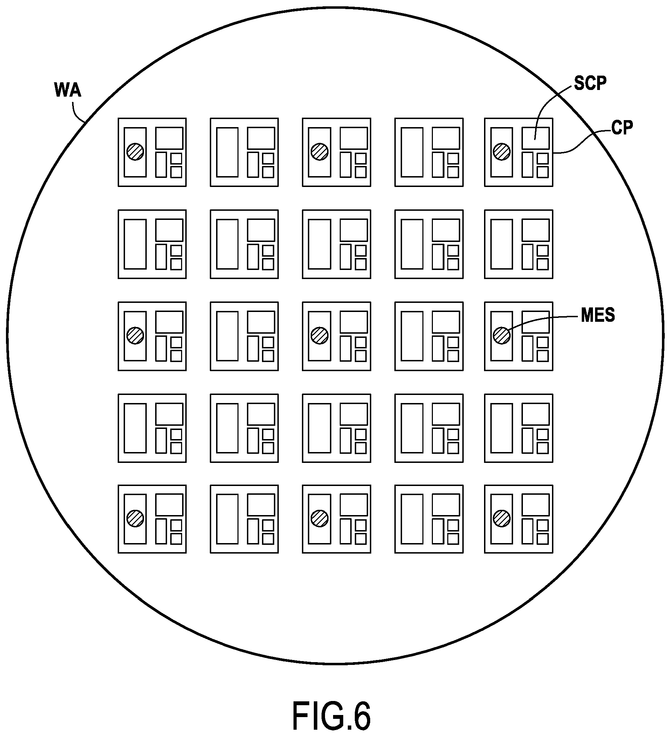

Figure 6 shows a wafer WA on which a plurality of components CP have been formed by manufacturing a plurality of sub-components SCP for each component CP. At this stage, the conductive plate has not been formed.

On this figure, the rectangle designated by reference CP refers to both components and the regions associated with these components.

Measuring the actual value of an electrical parameter can be performed at locations MES shown on the figure, which form a grid on the wafer and which are located every 2 components. This allows performing regressions to determine a deviation for sub-components belonging to adjacent regions.

It should be noted that using a large number of sub-components in each component allows obtaining a very precise actual value for the electrical parameter of the component.

Additionally, performing more measurements of actual values allows approaching even more closely a desired value.

## Claims

1. A method of fabricating a device comprising at least one electrical component (101) comprising:
- forming, above a substrate (102), a plurality of sub-components (C1, ..., C4) each having a top electrode,
- measuring an actual value of an electrical parameter of at least one sub-component of the plurality of sub-components,
- forming a conductive plate (104) for connecting together the top electrodes of sub-components of a group of selected sub-components belonging to the plurality of sub components so as to form the electrical component having a value of the electrical parameter which approximates a desired value, by taking into account the actual value of the at least one sub-component,
**characterized in that** the method comprises forming an insulating layer (103) over the top electrodes of the sub-components that do not belong to the group of selected sub-components, and **in that** the conductive plate covers the insulating layer and the top electrodes of the group of selected sub-components.

2. The method of claim 1, wherein taking into account the actual value of the at least one sub-component comprises determining a deviation between a nominal value associated with the at least one component and the actual value.

3. The method of claim 2, comprising measuring a plurality of actual values of the electrical parameter of sub-components at given positions.

4. The method of any one of claims 1 to 3, comprising forming a plurality of electrical components by connecting together the top electrodes of a plurality of groups of selected sub-components, and wherein each group of selected sub-components belongs to a region associated with the corresponding electrical component.

5. The method of claims 3 and 4, wherein the given positions are located in at least two distinct regions associated with different electrical components.

6. The method of claim 1, wherein the insulating layer is formed using a mask-less process.

7. The method of claim 6, wherein the mask-less process comprises an e-beam process or using an LCD mask.

8. The method of claim 1, wherein the conductive plate completely covers the top face of the at least one electrical component.

9. The method of any one of claims 1 to 8, wherein the sub-components are associated with nominal values for the electrical parameters selected according to a given distribution of nominal values.

10. The method of claim 9, wherein the number of sub-components is above 10 or above 100 or above 200.

11. The method of any one of claims 1 to 10, wherein the sub-components are capacitors and the electrical parameter is the capacitance or wherein the sub-components are resistors and the electrical parameter is the resistance.

12. A device comprising at least one electrical component (101) comprising:
- a substrate (102),
- above the substrate, a plurality of sub-components (C1, ..., C4) each having a top electrode,
- a conductive plate (104) connecting together the top electrodes of sub-components of a group of selected sub-components belonging to the plurality of sub-components so as to form the electrical component having a value of the electrical parameter which approximates a desired value,
**characterized in that** the device comprises an insulating layer (103) over the top electrodes of the sub-components that do not belong to the group of selected sub-components, and **in that** the conductive plate covers the insulating layer and the top electrodes of the group of selected sub-components.

13. The device of claim 12, further comprising an insulating layer (103) over the top electrodes of the sub-components that do not belong to the group of selected sub-components.

14. The device of claim 13, wherein the conductive plate completely covers the top face of the at least one electrical component.

## Patentansprüche

1. Verfahren zum Herstellen einer Vorrichtung, umfassend mindestens eine elektrische Komponente (101), umfassend:
- Bilden, oberhalb eines Substrats (102), einer Vielzahl von Teilkomponenten (C1, ..., C4), die jeweils eine obere Elektrode aufweisen,
- Messen eines Istwerts eines elektrischen Parameters von mindestens einer Teilkomponente der Vielzahl von Teilkomponenten,
- Bilden einer leitenden Platte (104) zum Verbinden der oberen Elektroden von Teilkomponenten einer Gruppe ausgewählter Teilkomponenten miteinander, die zu der Vielzahl von Teilkomponenten gehören, um die elektrische Komponente zu bilden, die einen Wert des elektrischen Parameters aufweist, der sich einem gewünschten Wert annähert, indem der Istwert der mindestens einen Teilkomponente berücksichtigt wird,
**dadurch gekennzeichnet, dass** das Verfahren ein Bilden einer Isolierschicht (103) über den oberen Elektroden der Teilkomponenten umfasst, die nicht zu der Gruppe der ausgewählten Teilkomponenten gehören, und dass die leitende Platte die Isolierschicht und die oberen Elektroden der Gruppe ausgewählter Teilkomponenten bedeckt.

2. Verfahren nach Anspruch 1, wobei ein Berücksichtigen des Istwerts der mindestens einen Teilkomponente ein Bestimmen einer Abweichung zwischen einem Sollwert, der mit der mindestens einen Komponente assoziiert ist, und dem Istwert umfasst.

3. Verfahren nach Anspruch 2, umfassend ein Messen einer Vielzahl von Istwerten des elektrischen Parameters von Teilkomponenten an gegebenen Positionen.

4. Verfahren nach einem der Ansprüche 1 bis 3, umfassend ein Bilden einer Vielzahl von elektrischen Komponenten durch Verbinden der oberen Elektroden einer Vielzahl von Gruppen ausgewählter Teilkomponenten miteinander, und wobei jede Gruppe ausgewählter Teilkomponenten zu einem Bereich gehört, der mit der entsprechenden elektrischen Komponente assoziiert ist.

5. Verfahren nach den Ansprüchen 3 und 4, wobei sich die gegebenen Positionen in mindestens zwei unterschiedlichen Bereichen befinden, die mit verschiedenen elektrischen Komponenten assoziiert sind.

6. Verfahren nach Anspruch 1, wobei die Isolierschicht unter Verwendung eines maskenlosen Prozesses gebildet wird.

7. Verfahren nach Anspruch 6, wobei der maskenlose Prozess einen Elektronenstrahlprozess oder eine Verwendung einer LCD-Maske umfasst.

8. Verfahren nach Anspruch 1, wobei die leitende Platte die Oberseite der mindestens einen elektrischen Komponente vollständig bedeckt.

9. Verfahren nach einem der Ansprüche 1 bis 8, wobei die Teilkomponenten mit Sollwerten für die elektrischen Parameter assoziiert sind, die gemäß einer gegebenen Verteilung von Sollwerten ausgewählt werden.

10. Verfahren nach Anspruch 9, wobei die Anzahl an Teilkomponenten über 10 oder über 100 oder über 200 ist.

11. Verfahren nach einem der Ansprüche 1 bis 10, wobei die Teilkomponenten Kondensatoren sind und der elektrische Parameter die Kapazität ist oder wobei die Teilkomponenten Widerstände sind und der elektrische Parameter der Widerstand ist.

12. Vorrichtung, umfassend mindestens eine elektrische Komponente (101), umfassend:
- ein Substrat (102),
- oberhalb des Substrats eine Vielzahl von Teilkomponenten (C1, ..., C4), die jeweils eine obere Elektrode aufweisen,
- eine leitende Platte (104), die die oberen Elektroden von Teilkomponenten einer Gruppe ausgewählter Teilkomponenten, die zu der Vielzahl von Teilkomponenten gehören, miteinander verbindet, um die elektrische Komponente zu bilden, die einen Wert des elektrischen Parameters aufweist, der sich einem gewünschten Wert annähert ist,
**dadurch gekennzeichnet, dass** die Vorrichtung eine Isolierschicht (103) über den oberen Elektroden der Teilkomponenten umfasst, die nicht zu der Gruppe der ausgewählten Teilkomponenten gehören, und dass die leitende Platte die Isolierschicht und die oberen Elektroden der Gruppe ausgewählter Teilkomponenten bedeckt.

13. Vorrichtung nach Anspruch 12, ferner umfassend eine Isolierschicht (103) über den oberen Elektroden der Teilkomponenten, die nicht zu der Gruppe der ausgewählten Teilkomponenten gehören.

14. Vorrichtung nach Anspruch 13, wobei die leitende Platte die Oberseite der mindestens einen elektrischen Komponente vollständig bedeckt.

## Revendications

1. Procédé de fabrication d'un dispositif comprenant au moins un composant électrique (101), comprenant :
- la formation, au-dessus d'un substrat (102), d'une pluralité de sous-composants (C1, ..., C4) ayant chacun une électrode supérieure,
- la mesure d'une valeur réelle d'un paramètre électrique d'au moins un sous-composant de la pluralité de sous-composants,
- la formation d'une plaque conductrice (104) destinée à relier entre elles les électrodes supérieures des sous-composants d'un groupe de sous-composants sélectionnés appartenant à la pluralité de sous-composants de manière à former le composant électrique ayant une valeur du paramètre électrique qui s'approche d'une valeur souhaitée, en tenant compte de la valeur réelle de l'au moins un sous-composant,
**caractérisé en ce que** le procédé comprend la formation d'une couche isolante (103) sur les électrodes supérieures des sous-composants qui n'appartiennent pas au groupe de sous-composants sélectionnés, et **en ce que** la plaque conductrice recouvre la couche isolante et les électrodes supérieures du groupe de sous-composants sélectionnés.

2. Procédé selon la revendication 1, dans lequel le fait de tenir compte de la valeur réelle de l'au moins un sous-composant comprend la détermination d'un écart entre une valeur nominale associée audit au moins un composant et la valeur réelle.

3. Procédé selon la revendication 2, comprenant la mesure d'une pluralité de valeurs réelles du paramètre électrique des sous-composants à des positions données.

4. Procédé selon l'une quelconque des revendications 1 à 3, comprenant la formation d'une pluralité de composants électriques en reliant entre elles les électrodes supérieures d'une pluralité de groupes de sous-composants sélectionnés, et dans lequel chaque groupe de sous-composants sélectionnés appartient à une région associée au composant électrique correspondant.

5. Procédé selon les revendications 3 et 4, dans lequel les positions données sont situées dans au moins deux régions distinctes associées à différents composants électriques.

6. Procédé selon la revendication 1, dans lequel la couche isolante est formée à l'aide d'un processus sans masque.

7. Procédé selon la revendication 6, dans lequel le processus sans masque comprend un processus par faisceau d'électrons ou l'utilisation d'un masque LCD.

8. Procédé selon la revendication 1, dans lequel la plaque conductrice recouvre complètement la face supérieure de l'au moins un composant électrique.

9. Procédé selon l'une quelconque des revendications 1 à 8, dans lequel les sous-composants sont associés à des valeurs nominales pour les paramètres électriques sélectionnés selon une distribution donnée de valeurs nominales.

10. Procédé selon la revendication 9, dans lequel le nombre de sous-composants est supérieur à 10, ou supérieur à 100, ou supérieur à 200.

11. Procédé selon l'une quelconque des revendications 1 à 10, dans lequel les sous-composants sont des condensateurs et le paramètre électrique est la capacité, ou dans lequel les sous-composants sont des résistances et le paramètre électrique est la résistance.

12. Dispositif comprenant au moins un composant électrique (101), comprenant :
- un substrat (102),
- au-dessus du substrat, une pluralité de sous-composants (C1, ..., C4) ayant chacun une électrode supérieure,
- une plaque conductrice (104) reliant entre elles les électrodes supérieures des sous-composants d'un groupe de sous-composants sélectionnés appartenant à la pluralité de sous-composants de manière à former le composant électrique ayant une valeur du paramètre électrique qui s'approche d'une valeur souhaitée,
**caractérisé en ce que** le dispositif comprend une couche isolante (103) sur les électrodes supérieures des sous-composants qui n'appartiennent pas au groupe de sous-composants sélectionnés, et **en ce que** la plaque conductrice recouvre la couche isolante et les électrodes supérieures du groupe de sous-composants sélectionnés.

13. Dispositif selon la revendication 12, comprenant en outre une couche isolante (103) sur les électrodes supérieures des sous-composants qui n'appartiennent pas au groupe de sous-composants sélectionnés.

14. Dispositif selon la revendication 13, dans lequel la plaque conductrice recouvre complètement la face supérieure de l'au moins un composant électrique.
